# EUROPEAN PATENT APPLICATION

(11) **EP 4 818 282 A1**
(43) Date of publication of application: **07.10.2026**
(21) Application number: 26169381.6
(22) Date of filing: 31.03.2026
(51) Int. Cl.: C09J 7/25, C09J 7/38, C09J 133/04

(54) **ADHESIVE SHEET**

(30) Priority: 04.04.2025 KR 20250044065
(71) Applicant: SAMSUNG SDI CO., LTD., Yongin-si, Gyeonggi-do 17084 (KR)
(72) Inventor: KANG, Seung Hyun, 16678 Suwon-si (KR); KIM, Won, 16678 Suwon-si (KR); KIM, Tae Ji, 16678 Suwon-si (KR); NAM, Irina, 16678 Suwon-si (KR); LEE, Joo Hoon, 16678 Suwon-si (KR); SONG, Kyung Hyun, 16678 Suwon-si (KR); KIM, Il Jin, 16678 Suwon-si (KR)
(74) Representative: Michalski Hüttermann & Partner mbB

(57) **Abstract**

Disclosed is an adhesive sheet. The adhesive sheet includes a base film; and a first adhesive layer stacked on a first surface of the base film. The base film is a polyethylene naphthalate film, the first adhesive layer includes a (meth)acrylic binder, a photocurable monomer, a heat curing agent, and a photoinitiator, and the photocurable monomer includes a mixture of an aromatic group-containing monomer, a hydrophobic group-containing monomer, and a hydroxyl group-containing monomer.

## Description

### CROSS-REFERENCE TO RELATED APPLICATION

The present application claims priority to and the benefit of Korean Patent Application No. 10-2025-0044065, filed on April 4, 2025, in the Korean Intellectual Property Office, the entire disclosure of which is incorporated herein by reference.

### BACKGROUND

### 1. Field

The present disclosure relates to an adhesive sheet.

### 2. Description of the Related Art

A semiconductor chip may be manufactured by several processes (e.g., through multiple processing steps). During the process of manufacturing the semiconductor chip, an adhesive tape may be used to improve handling of the semiconductor chip while preventing or reducing damage to the semiconductor chip. Generally, the adhesive tape for semiconductor chips is a double-sided adhesive tape. With a silicon wafer bonded to one surface of the adhesive tape, the adhesive tape may be subjected to various processes, including an etching process in an etching solution and high temperature treatment processes, such as solder formation and chip mounting. The adhesive tape is then removed from the silicon wafer. The adhesive tape bonded to the silicon wafer may be removed from the silicon wafer through high temperature treatment.

However, in recent years, the temperature used in the high temperature treatment has been increased. In addition, if irregularities are formed on a surface of the silicon wafer, the peel strength of the adhesive layer can be increased further after the high temperature treatment, thereby making it difficult to remove the adhesive tape from the silicon wafer. Moreover, after removal of the adhesive tape, a residue of the adhesive layer can remain on the silicon wafer.

### SUMMARY

One aspect according to embodiments of the present disclosure is to provide an adhesive sheet that includes a first adhesive layer having high chemical resistance.

One aspect according to embodiments of the present disclosure is to provide an adhesive sheet that leaves no residue of a second adhesive layer on an adherend if (e.g., when) the adhesive sheet is peeled off of the adherend after the adhesive sheet attached to the adherend is subjected to high temperature treatment.

Additional aspects will be set forth in part in the description which follows and, in part, will be apparent from the description, or may be learned by practice of the presented embodiments of the disclosure.

In one or more embodiments, an adhesive sheet includes: a base film; and a first adhesive layer on a first surface of the base film, wherein the base film is a polyethylene naphthalate film and the first adhesive layer includes a (meth)acrylic binder, a photocurable monomer, a heat curing agent, and a photoinitiator, the photocurable monomer including a mixture of an aromatic group-containing monomer, a hydrophobic group-containing monomer, and a hydroxyl group-containing monomer.

In some embodiments, the aromatic group-containing monomer may include a compound represented by Formula 1: 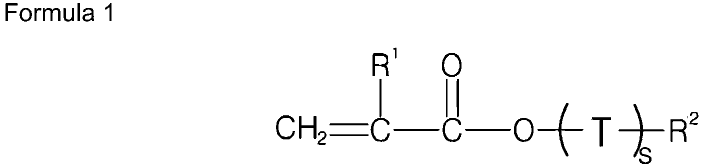 where R¹ is hydrogen or a methyl group; s is an integer of 0 to 10; R² is a substituted or unsubstituted C₆ to C₅₀ aryl group or a substituted or unsubstituted C₆ to C₅₀ aryloxy group; and T is a substituted or unsubstituted C₁ to C₆ alkylene group or a substituted or unsubstituted C₁ to C₆ alkyleneoxy group.

In some embodiments, the aromatic group-containing monomer may include at least one of phenoxybenzyl (meth)acrylate or biphenylmethyl (meth)acrylate.

In some embodiments, the aromatic group-containing monomer may be present in an amount of 30 parts by weight to 100 parts by weight relative to 100 parts by weight of the (meth)acrylic binder.

In some embodiments, the hydrophobic group-containing monomer may include at least one of a (meth)acrylic acid ester having a hydrophobic group at an ester site thereof or a (meth)acrylic monomer having a morpholine group.

In some embodiments, the hydrophobic group-containing monomer may include at least one selected from among isobornyl (meth)acrylate, dicyclopentenyl (meth)acrylate, dicyclopentanyl (meth)acrylate, and (meth)acryloylmorpholine.

In some embodiments, the hydrophobic group-containing monomer may be present in an amount of 1 part by weight to 50 parts by weight relative to 100 parts by weight of the (meth)acrylic binder.

In some embodiments, the hydroxyl group-containing monomer may be present in an amount of 1 part by weight to 50 parts by weight relative to 100 parts by weight of the (meth)acrylic binder.

In some embodiments, the aromatic group-containing monomer may be present in an amount of 50 parts by weight to 90 parts by weight, the hydroxyl group-containing monomer may be present in an amount of 1 part by weight to 40 parts by weight, and the hydrophobic group-containing monomer may be present in an amount of 5 parts by weight to 40 parts by weight, based on the total of 100 parts by weight of the aromatic group-containing monomer, the hydroxyl group-containing monomer, and the hydrophobic group-containing monomer.

In some embodiments, at least one of the aromatic group-containing monomer, the hydrophobic group-containing monomer, or the hydroxyl group-containing monomer may have a homopolymer glass transition temperature of 0°C or higher.

In some embodiments, the photocurable monomer may be present in an amount of 50 parts by weight to 300 parts by weight relative to 100 parts by weight of the (meth)acrylic binder.

In some embodiments, the aromatic group-containing monomer, the hydrophobic group-containing monomer, and the hydroxyl group-containing monomer may be present in a total amount of 95% by weight (wt%) or more in the photocurable monomer based on a total of 100 wt% of the photocurable monomer.

In some embodiments, the (meth)acrylic binder may be a copolymer of a monomer mixture including a (meth)acrylic acid ester having an alkyl group at an ester site thereof and a (meth)acrylic acid ester having an alkyl group substituted with at least one hydroxyl group at an ester site thereof.

In some embodiments, the first adhesive layer may include: 100 parts by weight of the (meth)acrylic acid binder; 50 parts by weight to 300 parts by weight of the photocurable monomer; greater than 0 parts by weight to 3 parts by weight of the heat curing agent; and greater than 0 parts by weight to 3 parts by weight of the photoinitiator.

In some embodiments, the adhesive sheet may further include a second adhesive layer on the first adhesive layer, the first adhesive layer being between the base film and the second adhesive layer; and a third adhesive layer on a second surface of the base film, the second surface facing away from the first surface of the base film.

According to one or more embodiments, the adhesive sheet has good chemical resistance and prevent or suppress (does not allow) loss of a first adhesive layer in an etching process in semiconductor manufacturing, thereby improving reliability of semiconductor manufacturing.

According to one or more embodiments, the adhesive sheet can improve reliability in semiconductor manufacturing by ensuring that no residue of a second adhesive layer is left on an adherend if (e.g., when) the adhesive sheet is peeled off of the adherend after the adhesive sheet attached to the adherend is subjected to high temperature treatment.

### BRIEF DESCRIPTION OF THE DRAWINGS

The accompanying drawings are included to provide a further understanding of the present disclosure and are incorporated in and constitute a part of this specification. The drawings illustrate embodiments of the present disclosure and, together with the description, serve to explain principles of the present disclosure.
FIG. 1 is a cross-sectional view of an adhesive sheet according to one or more embodiments.
FIG. 2 is a cross-sectional view of an adhesive sheet according to one or more embodiments.
FIG. 3 is a cross-sectional view of an adhesive sheet according to one or more embodiments.

### DETAILED DESCRIPTION DISCLOSURE

Hereinafter, example embodiments of the present disclosure will be described in detail. However, it should be understood that the following embodiments are provided by way of example and the present disclosure is not limited thereto and is defined only by the scope of the claims, and equivalents thereof.

As used herein, when an element, such as a layer, a film, a region, a plate, or the like, is referred to as being placed "on" another element, it can be directly placed on the other element, or intervening element(s) may be present, unless the context clearly indicates otherwise.

As used herein, the singular forms "a", "an" and "the" are intended to include the plural forms as well, unless the context clearly indicates otherwise. In addition, unless otherwise stated, when "A or B" is stated, it refers to A, B, or both A and B.

As used herein, "combination thereof" may refer to a mixture, stack, composite, copolymer, alloy, blend, and reaction product of compositions.

According to one or more embodiments, there is provided an adhesive sheet.

According to one or more embodiments, the adhesive sheet may be used in a semiconductor manufacturing process.

A method of using the adhesive sheet in the semiconductor manufacturing process according to one or more embodiments will be described in more detail.

The adhesive sheet for manufacturing semiconductors may be used in a semiconductor post-manufacturing process.

In some embodiments, the semiconductor post-manufacturing process may include a process in which a silicon wafer is stacked on one surface of the adhesive sheet; a process in which a glass plate is stacked on the other surface of the adhesive sheet; a process in which a stack of the glass plate, the adhesive sheet and the silicon wafer is subjected to grinding and etching; a high-temperature treatment process (reflow process) including forming a solder on the silicon wafer; a process in which the glass plate is removed from the adhesive sheet; and a process in which the silicon wafer is removed from the adhesive sheet.

In some embodiments, the glass plate may be removed from the adhesive sheet by laser treatment and/or light irradiation (for example, UV irradiation).

In some embodiments, the silicon wafer may be removed from the adhesive sheet by high temperature treatment and/or light irradiation.

In some embodiments, an adhesive layer of the adhesive sheet may be cured through light irradiation prior to the etching process.

The adhesive sheet includes a base film and a first adhesive layer stacked on (e.g., attached to) a lower surface of the base film.

In some embodiments, the adhesive sheet may further include a second adhesive layer stacked on a lower surface of the first adhesive layer. In some embodiments, the second adhesive layer is directly on the lower surface of the first adhesive layer, with the first adhesive layer being between the second adhesive layer and the base film.

A first release film may be further stacked on the lower surface of the second adhesive layer.

In some embodiments, the adhesive sheet may further include a third adhesive layer stacked on an upper surface of the base film. A second release film may be further stacked on an upper surface of the third adhesive layer.

Hereinafter, the adhesive sheet will be described in more detail.

### Base film

The base film may support the first adhesive layer. The base film is a polyethylene naphthalate (PEN) film. The PEN film is selected because the PEN film can be suitably used in the semiconductor post-manufacturing process.

The base film may have a predetermined thickness ratio with respect to the first adhesive layer. In some embodiments, the thickness ratio of the base film to the first adhesive layer may range from 1:0.8 to 1:1.2. Within this range, the first adhesive layer can secure stable adhesion to the base film.

In some embodiments, the base film may have a thickness of 5 µm to 100 µm, for example, 5 µm to 80 µm, or 5 µm to 50 µm. Within theses ranges, the base film can be suitably used in the adhesive sheet.

### First adhesive layer

The first adhesive layer has high chemical resistance. Accordingly, an etching solution used in the etching process during the semiconductor post-manufacturing process cannot infiltrate the first adhesive layer, thereby improving reliability of the semiconductor post-manufacturing process. In some embodiments, if (e.g., when) the first adhesive layer attached to a second adhesive layer (described below) is subjected to the etching process, there can be neither lifting between the first adhesive layer and the second adhesive layer nor infiltration of the etching liquid. As a result, separation between the first adhesive layer and the second adhesive layer can be prevented or suppressed in the etching process, thereby improving reliability of the semiconductor post-manufacturing process.

If (e.g., when) the adhesive sheet is peeled off of an adherend after the adhesive sheet is attached to the adherend and subjected to light irradiation and high temperature treatment, the first adhesive layer may act to prevent a residue of the second adhesive layer from remaining on the adherend (e.g., the second adhesive layer leaves no residue on the adherend after being peeled off of the adherend). As a result, reliability of the semiconductor manufacturing process can be improved. Hereinafter, this effect will be referred to as the "second adhesive layer residue-free effect ".

As will be described below, in one or more embodiments, the adherend is attached (e.g., directly) to the second adhesive layer of the adhesive sheet instead of being attached (e.g., directly) to the first adhesive layer thereof. The first adhesive layer can provide the second adhesive layer residue-free effect. Although it is believed that the first adhesive layer attached to the second adhesive layer affects the peel strength of the second adhesive layer if (e.g., when) the second adhesive layer is peeled off of the adherend, it should be understood that the present disclosure is not limited thereto.

Herein, "adherend" may refer to a silicon wafer or stainless steel (SUS) (e.g., a stainless steel substrate).

Herein, various suitable light irradiation conditions may be employed depending on the semiconductor post-manufacturing process and may include UV irradiation at an intensity of 2,000 mJ and at a wavelength of 395 nm.

Herein, various suitable high temperature treatment conditions may be employed depending on the temperature of the high temperature treatment in the semiconductor post-manufacturing process and may include, for example, holding at 200°C for 60 minutes.

In order to prevent separation between the first adhesive layer and the second adhesive layer during the process of peeling the second adhesive layer off of the adherend, the first adhesive layer may have a keying strength of 1,000 gf/inch or more, for example, 1,000 gf/inch to 2000 gf/inch, or 1,500 gf/inch to 2,000 gf/inch, with respect to the base film after light irradiation. The term "keying strength" refers to the bonding force between the first adhesive layer and the base film and is represented by the peel force (to be described in more detail below). Within these ranges, the first adhesive layer can exhibit high peel strength with respect to the base film to prevent separation between the base film and the first adhesive layer if (e.g., when) the adhesive sheet is peeled off of the adherend. As used herein, light irradiation may refer to light irradiation (or example, UV light) at an intensity of 2,000 mJ and at a wavelength of 380 nm to 400 nm, for example, 395 nm.

The first adhesive layer may have a keying strength of 100 gf/inch or more, for example, 100 gf/inch to 300 gf/inch, with respect to the base film before light irradiation. Within these ranges, it is easier to increase keying strength after light irradiation.

The first adhesive layer may be attached to the adherend through the second adhesive layer described below. The first adhesive layer can provide the following effects by affecting peel strength of the second adhesive layer with respect to the adherend.

In some embodiments, the adhesive sheet may have a peel strength of 10 gf/inch to 20 gf/inch, for example, 10 gf/inch to 15 gf/inch, if (e.g., when) a specimen of the adhesive sheet attached to the adherend through the second adhesive layer described below is peeled off of the adherend (e.g., prior to light irradiation or heat treatment). Within these ranges, the adhesive sheet can be stably attached to the adherend without suffering from excessive increase in peel strength upon high temperature treatment.

In some embodiments, the adhesive sheet may have a peel strength of 1 gf/inch to 15 gf/inch, for example, 5 gf/inch to 15 gf/inch, if (e.g., when) the specimen of the adhesive sheet attached to the adherend through the second adhesive layer is peeled off of the adherend after light irradiation. Within these ranges, the adhesive sheet can secure the second adhesive layer residue-free effect. Herein, light irradiation may refer to light irradiation (for example, UV light) at an intensity of 2,000 mJ and at a wavelength of 380 nm to 400 nm, for example, 395 nm.

In some embodiments, the adhesive sheet may have a peel strength of 20 gf/inch to 30 gf/inch, for example, 20 gf/inch to 25 gf/inch, if (e.g., when) the specimen of the adhesive sheet attached to the adherend through the second adhesive layer is peeled off of the adherend after the specimen is subjected to light irradiation and left at 200°C for 60 minutes. Within these ranges, the adhesive sheet can secure the second adhesive layer residue-free effect. Herein, light irradiation may mean light irradiation (for example, UV light) at an intensity of 2,000 mJ and at a wavelength of 380 nm to 400 nm, for example, 395 nm.

The first adhesive layer includes a (meth)acrylic binder, a photocurable monomer, a heat curing agent, and a photoinitiator, in which the photocurable monomer includes a mixture of an aromatic group-containing monomer, a hydrophobic group-containing monomer, and a hydroxyl group-containing monomer.

The first adhesive layer includes the (meth)acrylic binder, the photocurable monomer, the heat curing agent, and the photoinitiator, thereby providing high chemical resistance and the second adhesive layer residue-free effect.

In some embodiments, the first adhesive layer may include a cured product of a composition including the (meth)acrylic binder, the photocurable monomer, the heat curing agent, and the photoinitiator. In some embodiments, the cured product may be a heat cured product.

The first adhesive layer may be prepared by coating the composition to a predetermined thickness on the base film, followed by heat curing the composition. Heat curing may include treatment at 100°C to 150°C for 30 seconds to 10 minutes.

The first adhesive layer may have a thickness of 5 µm to 100 µm, for example, 5 µm to 80 µm, or 5 µm to 50 µm. Within these ranges, the first adhesive layer can be suitably used in the semiconductor post-manufacturing process and can easily secure suitable peel strength.

Hereinafter, each component of the composition for the first adhesive layer will be described in more detail.

### (Meth)acrylic binder

The (meth)acrylic binder may be a copolymer of a monomer mixture including a (meth)acrylic acid ester having an alkyl group at an ester site thereof and a (meth)acrylic acid ester having an alkyl group substituted with at least one hydroxyl group at an ester site thereof.

In some embodiments, the (meth)acrylic acid ester having an alkyl group at the ester site thereof and the (meth)acrylic acid ester having an alkyl group substituted with at least one hydroxyl group at the ester site thereof may be present in an amount of 95 mol% or more, for example, 95 mol% to 100 mol%, in the monomer mixture based on a total 100 mol% of all monomers in the monomer mixture. Within these ranges, the effects of the first adhesive layer can be easily achieved.

The (meth)acrylic acid ester having an alkyl group at the ester site may be a (meth)acrylic acid ester having an unsubstituted straight or branched C₁ to C₂₀ alkyl group at the ester site thereof. For example, the (meth)acrylic acid ester may include at least one selected from among methyl (meth)acrylate, ethyl (meth)acrylate, propyl (meth)acrylate, n-butyl (meth)acrylate, t-butyl (meth)acrylate, iso-butyl (meth)acrylate, pentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, decyl (meth)acrylate, and lauryl (meth)acrylate. Preferably, the (meth)acrylic acid ester includes at least one of n-butyl acrylate or 2-ethylhexyl acrylate. The (meth)acrylic acid ester may be present in an amount of 60 mol% to 99 mol%, for example, 80 mol% to 99 mol%, or 90 mol% to 99 mol%, in the monomer mixture based on a total 100 mol% of all monomers in the monomer mixture. Within these ranges, the effects of the first adhesive layer can be easily achieved.

The (meth)acrylic acid ester having an alkyl group substituted with at least one hydroxyl group at the ester site thereof may be a (meth)acrylic acid ester having a C₁ to C₁₀ alkyl group substituted with at least one hydroxyl group at the ester site thereof. For example, the (meth)acrylic acid ester may include at least one selected from among 2-hydroxyethyl (meth)acrylate, 3-hydroxypropyl (meth)acrylate, 4-hydroxybutyl (meth)acrylate, hydroxyhexyl (meth)acrylate, and 1-chloro-2-hydroxypropyl (meth)acrylate. For example, the (meth)acrylic acid ester may be 4-hydroxybutyl acrylate. The (meth)acrylic acid ester may be present in an amount of 1 mol% to 40 mol%, for example, 1 mol% to 20 mol%, or 1 mol% to 10 mol%, in the monomer mixture based on a total 100 mol% of all monomers in the monomer mixture. Within these ranges, the effects of the first adhesive layer can be easily achieved.

The (meth)acrylic binder may be prepared by polymerizing the monomer mixture through a typical polymerization method. The polymerization method may include any suitable method known to those skilled in the art. For example, the (meth)acrylic binder may be prepared by adding an initiator to the monomer mixture, followed by typical copolymerization, such as suspension polymerization, emulsion polymerization, solution polymerization, and/or the like. Polymerization may be performed at a temperature of 60°C to 70°C for 4 hours to 8 hours. The initiator may be selected from any suitable initiators including azo-based polymerization initiators and/or peroxides, such as benzoyl peroxide or acetyl peroxide.

The (meth)acrylic binder may have a weight average molecular weight of 500,000 g/mol to 3,000,000 g/mol, for example, 500,000 g/mol to 2,000,000 g/mol, or 500,000 g/mol to 1,500,000 g/mol. Within these ranges, peel strength of the first adhesive layer can be easily achieved.

As used herein, "weight average molecular weight" can be obtained as a polystyrene equivalent value by gel permeation chromatography.

### Photocurable monomer

The photocurable monomer includes a mixture of an aromatic group-containing monomer, a hydrophobic group-containing monomer, and a hydroxyl group-containing monomer.

The composition for the first adhesive layer includes the mixture of the aromatic group-containing monomer, the hydrophobic group-containing monomer, and the hydroxyl group-containing monomer as the photocurable monomer with respect to the (meth)acrylic binder. The first adhesive layer using a photocurable monomer not containing all three monomers (e.g., not including one or two of the above three monomers) cannot achieve the aforementioned effects of the first adhesive layer. Accordingly, the first adhesive layer has high chemical resistance, thereby improving reliability of the etching process in the semiconductor post-manufacturing process. In addition, the first adhesive layer can provide the second adhesive layer residue-free effect.

In some embodiments, the photocurable monomer may include a photocurable monomer having a homopolymer glass transition temperature of 0°C or higher, for example, 0°C to 150°C, or 5°C to 130°C. The monomer having a homopolymer glass transition temperature of 0°C or higher may be the aromatic group-containing monomer, the hydrophobic group-containing monomer, or the hydroxyl group-containing monomer.

Herein, "homopolymer glass transition temperature" may refer to a glass transition temperature (Tg) measured with respect to a homopolymer of a target (e.g., given) monomer using a DSC Discovery (TA Instruments). For example, the homopolymer of the target monomer is heated to 180°C at a heating rate of 20°C/min, is slowly cooled to -100°C, and heated again to 100°C at a heating rate of 10°C/min to obtain an endothermic transition curve. Then, an inflection point of the endothermic transition curve may be defined as the homopolymer glass transition temperature of the target monomer.

The photocurable monomer includes an aromatic group-containing monomer. The aromatic group-containing monomer may be included in the composition for the first adhesive layer to improve chemical resistance of the first adhesive layer and to provide the second adhesive layer residue-free effect.

The photocurable monomer includes a hydrophobic group-containing monomer. The hydrophobic group-containing monomer may be included in the composition for the first adhesive layer to easily achieve the second adhesive layer residue-free effect. Herein, the hydrophobic group may be a non-aromatic group.

The photocurable monomer includes a hydroxyl group-containing monomer. The hydroxyl group-containing monomer does not excessively increase initial peel strength of the second adhesive layer to an adherend. If the initial peel strength of the second adhesive layer to the adherend is excessively high, peel strength of the second adhesive layer to the adherend can remain high even after high temperature treatment, thereby allowing (e.g., causing) a residue of the second adhesive layer to remain on the adherend upon removal of the second adhesive layer from the adherend.

In some embodiments, the aromatic group-containing monomer, the hydrophobic group-containing monomer, and the hydroxyl group-containing monomer may be present in a total amount of 95 wt% or more, for example, 95 wt% to 100 wt%, or 100 wt%, in the photocurable monomer based on a total 100 wt% of the photocurable monomer. Within these ranges, the effects of the first adhesive layer can be easily achieved.

The aromatic group-containing monomer may be a mono- or higher functional monomer having an aromatic group at an ester site thereof. Here, the "aromatic group" may be a C₆ to C₅₀ monocyclic or heterocyclic functional group.

In some embodiments, the aromatic group-containing monomer may include a compound represented by Formula 1, without being limited thereto: 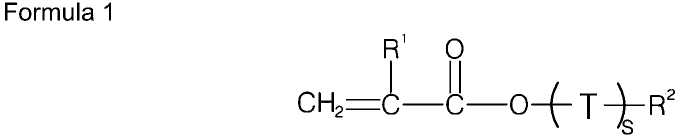 where R¹ is hydrogen or a methyl group; s is an integer of 0 to 10; R² is a substituted or unsubstituted C₆ to C₅₀ aryl group or a substituted or unsubstituted C₆ to C₅₀ aryloxy group; and T is a substituted or unsubstituted C₁ to C₆ alkylene group or a substituted or unsubstituted C₁ to C₆ alkyleneoxy group.

As used herein, "substituted or unsubstituted" refers to that at least one hydrogen atom is substituted with a C₁ to C₁₀ alkyl group, a C₁ to C₁₀ thioalkyl group, a C₁ to C₁₀ alkoxy group, a halogen (F, Cl, Br, or I), a C₃ to C₁₀ cycloalkyl group, or a C₆ to C₂₀ aryl group.

For example, the aromatic group-containing monomer may include at least one selected from the group consisting of phenoxybenzyl (meth)acrylate, biphenylmethyl (meth)acrylate, phenoxy (meth)acrylate, 2-ethylphenoxy (meth)acrylate, benzyl (meth)acrylate, phenyl (meth)acrylate, 2-ethylthiophenyl (meth)acrylate, 2-phenylethyl (meth)acrylate, 3-phenylpropyl (meth)acrylate, 4-phenylbutyl (meth)acrylate, 2-(2-methylphenyl)ethyl (meth)acrylate, 2-(3-methylphenyl)ethyl (meth)acrylate, 2-(4-methylphenyl)ethyl (meth)acrylate, 2-(4-propylphenyl)ethyl (meth)acrylate, 2-(4-(1-methylethyl)phenyl)ethyl (meth)acrylate, 2-(4-methoxyphenyl)ethyl (meth)acrylate, 2-(4-cyclohexylphenyl)ethyl (meth)acrylate, 2-(2-chlorophenyl)ethyl (meth)acrylate, 2-(3-chlorophenyl)ethyl (meth)acrylate, 2-(4-chlorophenyl)ethyl (meth)acrylate, 2-(4-bromophenyl)ethyl (meth)acrylate, 2-(3-phenylphenyl)ethyl (meth)acrylate, ortho-biphenyl (meth)acrylate, meta-biphenyl (meth)acrylate, para-biphenyl (meth)acrylate, 2,6-terphenyl (meth)acrylate, ortho-terphenyl (meth)acrylate, meta-terphenyl (meth)acrylate, para-terphenyl (meth)acrylate, 4-(4-methylphenyl)phenyl (meth)acrylate, 4-(2-methylphenyl)phenyl (meth)acrylate, 2-(4-methylphenyl)phenyl (meth)acrylate, 2-(2-methylphenyl)phenyl (meth)acrylate, 4-(4-ethylphenyl)phenyl (meth)acrylate, 4-(2-ethylphenyl)phenyl (meth)acrylate, 2-(4-ethylphenyl)phenyl (meth)acrylate, 2-(2-ethylphenyl)phenyl (meth)acrylate, and combinations thereof.

In some embodiments, the aromatic group-containing monomer includes at least one of phenoxybenzyl acrylate or biphenylmethyl (meth)acrylate.

The aromatic group-containing monomer may be present in an amount of 30 parts by weight to 100 parts by weight, for example, 30 parts by weight to 80 parts by weight, 30 parts by weight to 70 parts by weight, or 30 parts by weight to 60 parts by weight, relative to 100 parts by weight of the (meth)acrylic binder. Within these ranges, the composition for the first adhesive layer can improve chemical resistance of the first adhesive layer and can easily provide the second adhesive layer residue-free effect upon peeling the adhesive sheet off from an adherend.

The hydroxyl group-containing monomer may include a (meth)acrylic acid ester having an alkyl group substituted with at least one hydroxyl group at an ester site thereof. Details of the (meth)acrylic acid ester are the same as those described above.

In some embodiments, the hydroxyl group-containing monomer may include at least one of 2-hydroxyethyl (meth)acrylate or 4-hydroxybutyl (meth)acrylate.

The hydroxyl group-containing monomer may be present in an amount of 1 part by weight to 50 parts by weight, for example, 5 parts by weight to 40 parts by weight, 5 parts by weight to 30 parts by weight, or 5 parts by weight to 25 parts by weight, relative to 100 parts by weight of the (meth)acrylic binder. Within these ranges, the composition for the first adhesive layer can easily secure the second adhesive layer residue-free effect upon peeling the adhesive sheet off of an adherend.

The hydrophobic group-containing monomer may include at least one of a (meth)acrylic acid ester having a hydrophobic group at an ester site thereof or a (meth)acrylic monomer having a morpholine group.

In some embodiments, the hydrophobic group-containing monomer may include at least one of a (meth)acrylic acid ester having a substituted or unsubstituted C₃ to C₂₀ alicyclic group at an ester site thereof or (meth)acryloylmorpholine. For example, the hydrophobic group-containing monomer may include at least one selected from among bornyl (meth)acrylate, isobornyl (meth)acrylate, dicyclopentenyl (meth)acrylate, dicyclopentanyl (meth)acrylate, and (meth)acryloylmorpholine.

The hydrophobic group-containing monomer may be present in an amount of 1 part by weight to 50 parts by weight, for example, 5 parts by weight to 40 parts by weight, 5 parts by weight to 30 parts by weight, or 10 parts by weight to 30 parts by weight, relative to 100 parts by weight of the (meth)acrylic binder. Within these ranges, the composition for the first adhesive layer can improve chemical resistance of the first adhesive layer and can easily secure the second adhesive layer residue-free effect upon peeling the adhesive sheet off of an adherend.

In some embodiments, relative to the total of 100 parts by weight of the aromatic group-containing monomer, the hydroxyl group-containing monomer, and the hydrophobic group-containing monomer, the aromatic group-containing monomer may be present in an amount of 50 parts by weight to 90 parts by weight, for example, 50 parts by weight to 80 parts by weight, the hydroxyl group-containing monomer may be present in an amount of 1 part by weight to 40 parts by weight, for example, 5 parts by weight to 30 parts by weight, and the hydrophobic group-containing monomer may be present in an amount of 5 parts by weight to 40 parts by weight, for example, 10 parts by weight to 40 parts by weight. Within these ranges, the composition for the first adhesive layer can improve chemical resistance of the first adhesive layer and can easily secure the second adhesive layer residue-free effect upon peeling the adhesive sheet off of an adherend.

The photocurable monomer may be present in an amount of 50 parts by weight to 300 parts by weight, for example, 50 parts by weight to 200 parts by weight, 50 parts by weight to 100 parts by weight, or 50 parts by weight to 90 parts by weight, relative to 100 parts by weight of the (meth)acrylic binder. Within these ranges, the effects of the first adhesive layer can be easily realized.

### Heat curing agent

The heat curing agent can assist in heat curing of the (meth)acrylic binder to form a matrix of the first adhesive layer and to provide keying strength of the first adhesive layer with respect to the base film and peel strength of the first adhesive layer with respect to the second adhesive layer.

The heat curing agent may include at least one selected from among an isocyanate curing agent, a metal chelate curing agent, a carbodiimide curing agent, an aziridine curing agent, and an epoxy curing agent. In some embodiments, the heat curing agent is an isocyanate curing agent.

The isocyanate curing agent may include a bi- or higher functional isocyanate curing agent, for example, a bi- to hexafunctional isocyanate curing agent. In some embodiments, the isocyanate curing agent may include at least one selected from among xylene diisocyanate including m-xylene diisocyanate and the like, methylene bis(phenylisocyanate) including 4,4'-methylene bis(phenylisocyanate) and the like, naphthalene diisocyanate, tolylene diisocyanate, hexamethylene diisocyanate, and isophorone diisocyanate, or adducts thereof. For example, the adducts may include a trimethylolpropane adduct of tolylene diisocyanate, a trimethylolpropane adduct of hexamethylene diisocyanate, a trimethylolpropane adduct of isophorone diisocyanate, a trimethylolpropane adduct of xylene diisocyanate, isocyanurate of tolylene diisocyanate, isocyanurate of hexamethylene diisocyanate, and isocyanurate of isophorone diisocyanate. The composition may include at least one of these isocyanate curing agents.

The heat curing agent may be present in an amount of greater than 0 parts by weight to 3 parts by weight, for example, 0.001 parts by weight to 3 parts by weight, 0.01 parts by weight to 2 parts by weight, relative to 100 parts by weight of the (meth)acrylic binder. Within these ranges, the first adhesive layer can achieve improvement in reliability.

### Photoinitiator

The photoinitiator serves to cure the first adhesive layer upon light irradiation during the semiconductor post-manufacturing process described above. If (e.g., when) the first adhesive layer is irradiated with light, the cross-linking density of the first adhesive layer is increased, thereby improving chemical resistance of the first adhesive layer.

The photoinitiator may include at least one of a photo-radical initiator or a cationic photoinitiator.

In some embodiments, the photoinitiator may include a photoinitiator having a maximum absorption wavelength within the range of irradiation wavelengths applied in light irradiation. For example, the photoinitiator may have a maximum absorption wavelength in the range of 280 nm to 430 nm. Within these ranges, the photo-curing effect of the binder can be obtained by light irradiation. For example, the photoinitiator may include a phosphorus initiator, a ketone initiator, and the like, without being limited thereto.

The photoinitiator may be present in an amount of greater than 0 parts by weight to 3 parts by weight, for example, 0.05 parts by weight to 3 parts by weight or 0.1 parts by weight to 3 parts by weight, relative to 100 parts by weight of the (meth)acrylic binder. Within these ranges, the composition for the first adhesive layer can secure uniform curing of the (meth)acrylic binder through light irradiation and can prevent deterioration in transparency of the first adhesive layer due to residual initiator.

The composition for the first adhesive layer may further include typical additives used in adhesive layers. For example, the additives may include surfactants, heat stabilizers, light stabilizers, pigments, dispersants, and the like, without being limited thereto.

### Second adhesive layer

The second adhesive layer may be removed from an adherend after being attached to the adherend in the semiconductor post-manufacturing process.

The second adhesive layer may include a (meth)acrylic binder having a (meth)acrylate group on a side chain thereof, a silicone oligomer, a heat curing agent, and a photoinitiator.

In some embodiments, the second adhesive layer may include a cured product of a composition including the (meth)acrylic binder having a (meth)acrylate group on the side chain thereof, the silicone oligomer, the heat curing agent, and the photoinitiator. In some embodiments, the cured product may be a heat cured product.

In some embodiments, the second adhesive layer may have a thickness of 5 µm to 300 µm, for example, 50 µm to 300 µm, or 50 µm to 200 µm. Within these ranges, the second adhesive layer can be suitably used in the adhesive sheet and can have a good effect in protection of the adherend or a terminal formed on the adherend.

The second adhesive layer may be prepared by coating a composition for the second adhesive layer to a predetermined thickness on a release film (for example, a first release film described below), followed by heat curing the composition. Heat curing may include treatment at a temperature of 100°C to 150°C for 30 seconds to 10 minutes.

### (Meth)acrylic binder having a (meth)acrylate group on the side chain

The binder has a (meth)acrylate group on a side chain thereof. Accordingly, the binder can be further cured upon light irradiation as described in the semiconductor post-manufacturing process, thereby improving chemical resistance of the second adhesive layer through to increase in crosslink density thereof.

In some embodiments, the binder may include a unit of Formula 2: 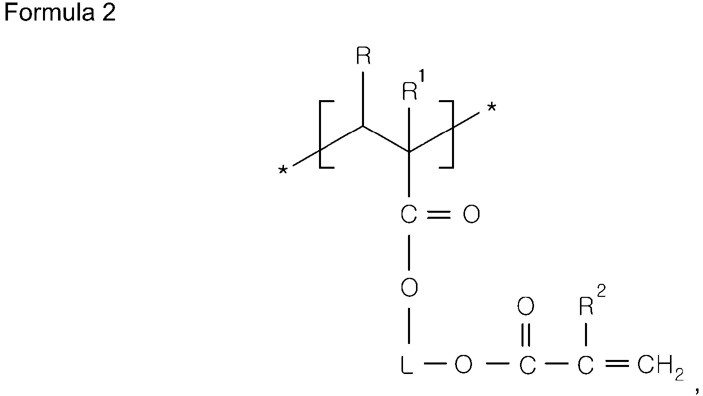
where * is a linking site of an element, and
R, R¹, and R² are each independently hydrogen or a methyl group and L is a bivalent organic group.

In Formula 2, L may be a substituted or unsubstituted C₁ to C₁₀ alkylene group or a substituted or unsubstituted C₆ to C₂₀ arylene group. In Formula 2, L may further include an amide group or an ester group.

In some embodiments, the binder may include a unit of Formula 2-1: 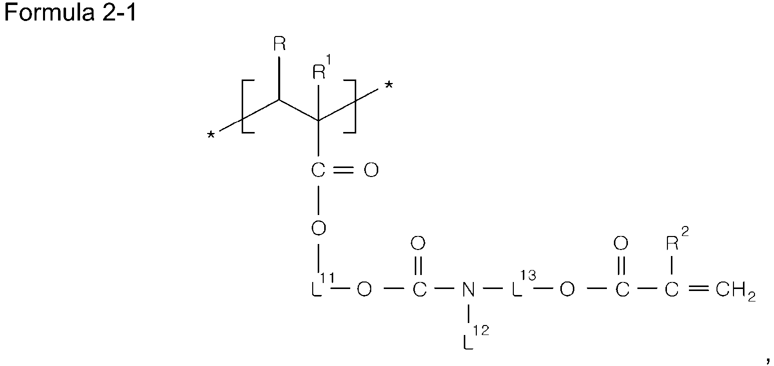
where * is a linking site of an element,
R, R¹, and R² are each independently hydrogen or a methyl group,
L¹² is hydrogen or a substituted or unsubstituted C₁ to C₅ alkyl group, and
L¹¹ and L¹³ are each independently a substituted or unsubstituted C₁ to C₁₀ alkylene group.

For example, in Formula 2-1, L¹¹ and L¹³ may be each independently a substituted or unsubstituted C₁ to C₅ alkylene group.

The binder may have a higher weight average molecular weight than the silicone oligomer . For example, the binder may have a weight average molecular weight of 100,000 g/mol or more, for example, 100,000 g/mol to 1,000,000 g/mol, or 100,000 g/mol to 800,000 g/mol. Within these ranges, the second adhesive layer can easily achieve target initial peel strength.

The binder may include a polymer of a monomer mixture including a monomer having a (meth)acrylate group on a side chain thereof. The monomer having a (meth)acrylate group on the side chain thereof may include at least one compound represented by Formula 3: 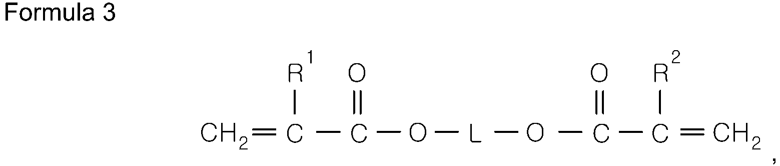 where R¹, R², and L are the same as defined in Formula 2.

In Formula 3, L may be a substituted or unsubstituted C₁ to C₁₀ alkylene group or a substituted or unsubstituted C₆ to C₂₀ arylene group. In Formula 3, L may further include an amide group or an ester group.

In some embodiments, the monomer having a (meth)acrylate group on the side chain thereof may include at least one compound represented by Formula 3-1: 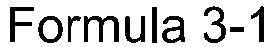 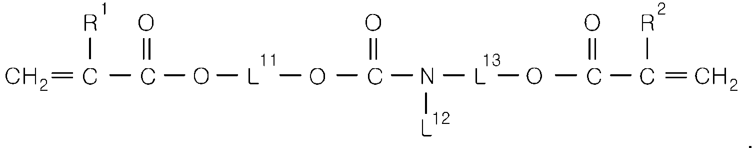 where R¹, R², L¹¹, L¹², and L¹³ are the same as defined in Formula 2-1.

For example, in Formula 3-1, L¹¹ and L¹³ may be each independently a substituted or unsubstituted C₁ to C₅ alkylene group.

The binder may include a reaction product obtained by preparing a prepolymer, followed by reacting the prepolymer with the monomer having a (meth)acrylate group on the side chain thereof. This process can ensure that there are no side reactions upon polymerization. For example, the monomer having a (meth)acrylate group on the side chain thereof may be 2-isocyanatoethyl (meth)acrylate.

In some embodiments, the prepolymer may be a prepolymer of a monomer mixture including a (meth)acrylic acid ester having an alkyl group at an ester site thereof and a (meth)acrylic acid ester having an alkyl group substituted with at least one hydroxyl group at an ester site thereof.

The (meth)acrylic acid ester having an alkyl group at the ester site thereof may be a (meth)acrylic acid ester having an unsubstituted straight or branched C₁ to C₂₀ alkyl group at the ester site thereof. Details of the (meth)acrylic acid ester are the same as those described above. For example, the (meth)acrylic acid ester may include at least one selected from among 2-ethylhexyl acrylate, 2-ethylhexyl methacrylate, methyl acrylate, and methyl methacrylate. The (meth)acrylic acid ester having an alkyl group at the ester site thereof may be present in an amount of 60 mol% to 95 mol%, for example, 70 mol% to 95 mol%, or 80 mol% to 95 mol%, in the monomer mixture based on a total 100 mol% of all monomers in the monomer mixture for the prepolymer. Within these ranges, the composition can easily form the second adhesive layer.

The (meth)acrylic acid ester having an alkyl group substituted with at least one hydroxyl group at an ester site thereof may be a (meth)acrylic acid ester having a C₁ to C₁₀ alkyl group substituted with at least one hydroxyl group at the ester site. Details of the (meth)acrylic acid ester are the same as those described above. For example, the (meth)acrylic acid ester may include at least one of 4-hydroxybutyl acrylate or 4-hydroxybutyl methacrylate. The (meth)acrylic acid ester having an alkyl group substituted with at least one hydroxyl group at an ester site thereof may be present in an amount of 5 mol% to 40 mol%, for example, 5 mol% to 30 mol%, or 5 mol% to 20 mol%, in the monomer mixture based on a total 100 mol% of all monomers in the monomer mixture for the prepolymer. Within these ranges, the (meth)acrylic acid ester can provide initial adhesion of the second adhesive layer and reaction sites with the monomer having a (meth)acrylate group on the side chain thereof.

In some embodiments, the (meth)acrylic acid ester having an alkyl group at the ester site thereof and the (meth)acrylic acid ester having an alkyl group substituted with at least one hydroxyl group at the ester site thereof may be present in a total amount of 95 mol% or more, for example, 95 mol% to 100 mol%, or 100 mol%, in the monomer mixture based on a total 100 mol% of all monomers in the monomer mixture for the prepolymer.

The monomer having a (meth)acrylate group on the side chain thereof may be a monomer having a functional group capable of reacting with the hydroxyl group. For example, the monomer may be 2-isocyanatoethyl (meth)acrylate.

In some embodiments, the monomer having a (meth)acrylate group on the side chain thereof may be present in an amount of 1 part by weight to 10 parts by weight, for example, 1 part by weight to 5 parts by weight, relative to 100 parts by weight of the monomer mixture for the prepolymer. Within these ranges, the effects of the second adhesive layer can be easily achieved.

The binder may be prepared by preparing a prepolymer from the monomer mixture for the prepolymer, followed by reacting the prepolymer with the monomer having a (meth)acrylate group on the side chain.

### Silicone oligomer

The silicone oligomer includes silicone to suppress an increase in peel strength of the second adhesive layer after high temperature treatment in the semiconductor post-manufacturing process.

In some embodiments, the silicone oligomer may have a (meth)acrylate group on a side chain thereof. Accordingly, the silicone oligomer can be further cured upon light irradiation in the semiconductor post-manufacturing process, thereby improving chemical resistance of the second adhesive layer through increase in crosslinking density thereof. The oligomer may have a weight average molecular weight of 200,000 g/mol or less, for example, 10,000 g/mol to 200,000 g/mol, or 10,000 g/mol to 100,000 g/mol.

The oligomer may include an oligomer (or a polymer) of a monomer mixture.

The monomer mixture may include a silicone-containing (meth)acrylate. The silicone-containing (meth)acrylate may include at least one compound represented by Formula 4: 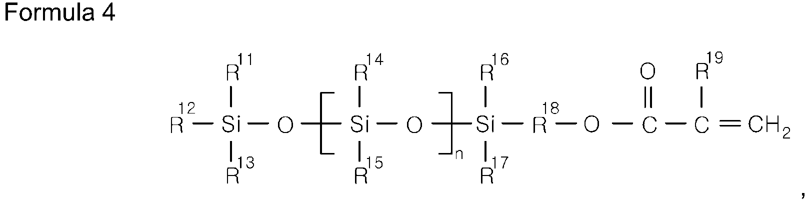
where R¹¹, R¹², R¹³, R¹⁴, R¹⁵, R¹⁶, and R¹⁷ are each independently a substituted or unsubstituted C₁ to C₁₀ alkyl group, a substituted or unsubstituted C₂ to C₁₀ alkenyl group, a substituted or unsubstituted C₂ to C₁₀ alkynyl group, a substituted or unsubstituted C₆ to C₁₀ aryl group, or a substituted or unsubstituted C₅ to C₁₀ cycloalkyl group;
R¹⁸ is a substituted or unsubstituted C₁ to C₁₀ alkylene group;
R¹⁹ is hydrogen or a methyl group; and
n is an integer of 1 or more.

The silicone-containing (meth)acrylate may be prepared by a suitable method known to those skilled in the art or may be a commercially available product.

The silicone-containing (meth)acrylate may be present in an amount of 0.01 mol% to 30 mol%, for example, 0.1 mol% to 20 mol%, 0.1 mol% to 10 mol%, or 0.1 mol% to 5 mol% based on a total 100 mol% of all monomers in the monomer mixture for the silicone oligomer. Within these ranges, the composition for the second adhesive layer can secure peel strength of the second adhesive layer while suppressing the increase in peel strength in a high temperature process.

The monomer mixture may further include a (meth)acrylic acid ester having an alkyl group at an ester site thereof and a (meth)acrylic acid ester having an alkyl group substituted with at least one hydroxyl group at an ester site thereof.

The (meth)acrylic acid ester having an alkyl group at the ester site thereof may be a (meth)acrylic acid ester having an unsubstituted straight or branched C₁ to C₂₀ alkyl group at the ester site thereof. Details of the (meth)acrylic acid ester are the same as those described above. For example, the (meth)acrylic acid ester may include at least one selected from among 2-ethylhexyl acrylate, 2-ethylhexyl methacrylate, and 2-ethylhexyl methacrylate.

The (meth)acrylic acid ester having an alkyl group at the ester site thereof may be present in an amount of 80 mol% to 99 mol%, for example, 85 mol% to 99 mol%, or 80 mol% to 95 mol%, in the monomer mixture based on a total 100 mol% of all monomers in the monomer mixture. Within these ranges, the composition for the second adhesive layer can easily form the second adhesive layer.

The (meth)acrylic acid ester having an alkyl group substituted with at least one hydroxyl group at the ester site may be a (meth)acrylic acid ester having a C₁ to C₁₀ alkyl group substituted with at least one hydroxyl group at the ester site. Details of the (meth)acrylic acid ester are the same as those described above. For example, the (meth)acrylic acid ester may include at least one of 4-hydroxybutyl acrylate or 4-hydroxybutyl methacrylate.

The (meth)acrylic acid ester having an alkyl group substituted with at least one hydroxyl group at the ester site thereof may be present in an amount of 0.1 mol% to 40 mol%, 0.1 mol% to 10 mol%, or 0.1 mol% to 5 mol% based on a total 100 mol% of all monomers in the monomer mixture. Within these ranges, the (meth)acrylic acid ester can provide initial adhesion of the second adhesive layer and reaction sites with the monomer having a (meth)acrylate group on the side chain thereof.

In some embodiments, the oligomer may be prepared by polymerizing the monomer mixture.

In some embodiments, the oligomer may be prepared by preparing a pre-oligomer from the monomer mixture, followed by reacting the pre-oligomer with the monomer having a (meth)acrylate group on the side chain thereof.

The monomer having a (meth)acrylate group on the side chain may be a monomer having a functional group capable of reacting with a hydroxyl group. For example, the monomer may be 2-isocyanatoethyl (meth)acrylate.

In some embodiments, the monomer having a (meth)acrylate group on the side chain is present in an amount of 1 part by weight to 10 parts by weight, for example, 1 part by weight to 5 parts by weight, relative to 100 parts by weight of the monomer mixture for the oligomer. Within these ranges, the effects of the first adhesive layer can be easily achieved.

The silicone oligomer may be present in an amount of 0.01 parts by weight to 10 parts by weight, for example, 0.01 parts by weight to 5 parts by weight, 0.1 parts by weight to 5 parts by weight, or 0.5 parts by weight to 3 parts by weight, relative to 100 parts by weight of the (meth)acrylic binder. Within these ranges, the composition for the second adhesive layer can prevent increase in peel strength of the second adhesive layer.

### Heat curing agent

The heat curing agent can assist in heat curing of the (meth)acrylic binder and the silicone oligomer to form a matrix of the second adhesive layer and to provide the initial peel strength of the second adhesive layer.

The heat curing agent may include at least one selected from among an isocyanate curing agent, a metal chelate curing agent, a carbodiimide curing agent, an aziridine curing agent, and an epoxy curing agent. In some embodiments, the heat curing agent is a mixture of an isocyanate curing agent and a metal chelate curing agent. The isocyanate curing agent is substantially the same as described above. The metal chelate curing agent may include a chelate curing agent having aluminum, tin, and the like, without being limited thereto.

The heat curing agent may be present in an amount of greater than 0 parts by weight to 3 parts by weight, for example, 0.001 parts by weight to 3 parts by weight, or 0.01 parts by weight to 2 parts by weight, relative to 100 parts by weight of the (meth)acrylic binder. Within these ranges, the composition can improve reliability of the second adhesive layer.

### Photoinitiator

The photoinitiator serves to increase the crosslinking density of the second adhesive layer through photocuring of the (meth)acrylic binder, thereby improving chemical resistance of the second adhesive layer with respect to an etching solution. The photoinitiator is substantially the same as described above.

The photoinitiator may be present in an amount of greater than 0 parts by weight to 3 parts by weight, for example, 0.05 parts by weight to 3 parts by weight, or 0.1 parts by weight to 3 parts by weight, relative to 100 parts by weight of the (meth)acrylic binder. Within these ranges, the composition can secure uniform curing of the (meth)acrylic binder through light irradiation and can prevent deterioration in transparency of the second adhesive layer due to residual initiator.

The composition for the second adhesive layer may further include typical additives used in adhesive layers. The additives may include antistatic agents, surfactants, dispersants, release agents, and the like, without being limited thereto.

### Third adhesive layer

The third adhesive layer may be removed from a glass plate after being attached to the glass plate in the semiconductor post-manufacturing process.

The third adhesive layer may have a thickness of 1 µm to 100 µm, for example, 1 µm to 80 µm, or 10 µm to 70 µm. Within these ranges, the third adhesive layer can have a high degree of supporting the glass plate and can be easily removed from the glass plate.

The third adhesive layer is not limited to a particular type so long as the third adhesive layer has high peel strength with respect to the base film and can be peeled off of the glass plate after being adhesively attached to the glass plate by any suitable process, for example, by high temperature treatment and/or light irradiation.

In some embodiments, the third adhesive layer may include a (meth)acrylic binder having a (meth)acrylate group on a side chain thereof, a silicone oligomer, an oligomer having a high glass transition temperature, a heat curing agent, and a photoinitiator.

In some embodiments, the third adhesive layer may include a cured product of a composition including the (meth)acrylic binder having a (meth)acrylate group on the side chain thereof, the silicone oligomer, the oligomer having a high glass transition temperature, the heat curing agent, and the photoinitiator. The cured product may be a thermally cured product.

The third adhesive layer may be prepared by coating a composition for the third adhesive layer to a predetermined thickness on a release film, followed by heat curing the composition. Heat curing may include treatment at a temperature of 100°C to 150°C for 30 seconds to 10 minutes.

The (meth)acrylic binder having a (meth)acrylate group on the side chain is substantially the same as described above.

The silicone oligomer is substantially the same as described above.

The silicone oligomer may be present in an amount of 0.01 parts by weight to 10 parts by weight, for example, 0.01 parts by weight to 5 parts by weight, 0.1 parts by weight to 5 parts by weight, or 0.5 parts by weight to 3 parts by weight, relative to 100 parts by weight of the (meth)acrylic binder having a (meth)acrylate group on the side chain. Within these ranges, the composition can suppress an increase in the peel strength of the third adhesive layer.

The oligomer having a high glass transition temperature can improve chemical resistance of the third adhesive layer.

In some embodiments, the oligomer having a high glass transition temperature may have a higher glass transition temperature than the (meth)acrylic binder or the silicone oligomer.

In some embodiments, the oligomer having a high glass transition temperature may have a glass transition temperature of 10°C or higher. Within this range, the third adhesive layer can exhibit good chemical resistance. For example, the oligomer may have a glass transition temperature of 10°C to 50°C, for example, 10°C to 30 °C, or 10°C to 20 °C.

The oligomer may have a weight average molecular weight of 5,000 g/mol to 100,000 g/mol, for example, 10,000 g/mol to 100,000 g/mol, or 50,000 g/mol to 100,000 g/mol. Within these ranges, the oligomer can easily achieve the above glass transition temperature without affecting peel strength of the third adhesive layer.

The oligomer may be present in an amount of less than 20 parts by weight relative to 100 parts by weight of the (meth)acrylic binder. Within this range, the third adhesive layer can have good chemical resistance without increasing haze. For example, the oligomer may be present in an amount of 1 part by weight to 15 parts by weight, or 5 parts by weight to 15 parts by weight, relative to the 100 parts by weight of the binder. Within these ranges, the third adhesive layer can exhibit good chemical resistance.

In some embodiments, the oligomer may be a silicone-free oligomer.

The oligomer may be prepared by polymerizing a monomer mixture. The type and content of monomers in the monomer mixture may be adjusted so long as the oligomer can have the glass transition temperature within the above range.

The monomer mixture may include a monomer having a homopolymer glass transition temperature of 20°C or higher. With the monomer having a homopolymer glass transition temperature of 20°C or higher, the oligomer can easily reach the glass transition temperature within the above range. For example, the monomer may have a homopolymer glass transition temperature of 20°C to 110°C, for example, 50°C to 100°C.

In some embodiments, the monomer having a homopolymer glass transition temperature of 20°C or higher may include a (meth)acrylic acid ester having an alicyclic group at an ester site thereof. Among the monomers having a homopolymer glass transition temperature of 20°C or higher, the (meth)acrylic acid ester having an alicyclic group can improve effectiveness of the third adhesive layer if (e.g., when) combined with the (meth)acrylic binder having a (meth)acrylate group on the side chain thereof and a silicone oligomer described above.

The (meth)acrylic acid ester may be a (meth)acrylic acid ester having a substituted or unsubstituted C₆ to C₂₀ (meth)alicyclic group at an ester site thereof. For example, the (meth)acrylic acid ester may include at least one selected from among isobornyl (meth)acrylate, cyclohexyl (meth)acrylate, dicyclopentenyl (meth)acrylate, dicyclopentanyl (meth)acrylate, and bornyl (meth)acrylate.

The (meth)acrylic acid ester may be present in an amount of 30 mol% or more in the monomer mixture. Within these ranges, the oligomer can easily reach the glass transition temperature thereof.

The (meth)acrylic acid ester may be present in an amount of 30 mol% to 80 mol%, for example, 40 mol% to 80 mol%, or 40 mol% to 60 mol% based on a total 100 mol% of all monomers in the monomer mixture. Within these ranges, the (meth)acrylic acid ester can provide the glass transition temperature of the oligomer and can easily secure initial adhesion of the third adhesive layer.

The monomer mixture may further include a co-monomer polymerizable with the (meth)acrylic acid ester. The co-monomer may include a (meth)acrylic acid ester having an alkyl group at an ester site thereof and a (meth)acrylic acid ester having an alkyl group substituted with at least one hydroxyl group at an ester site thereof.

The (meth)acrylic acid ester having an alkyl group at the ester site thereof are substantially the same as described above. For example, the (meth)acrylic acid ester may include at least one of 2-ethylhexyl acrylate or n-butyl acrylate. The (meth)acrylic acid ester may be present in an amount of 5 mol% to 30 mol%, for example, 5 mol% to 25 mol%, or 10 mol% to 25 mol%, in the monomer mixture based on a total 100 mol% of all monomers in the monomer mixture. Within these ranges, the (meth)acrylic acid ester can provide the glass transition temperature of the oligomer and can easily secure initial adhesion of the third adhesive layer.

The (meth)acrylic acid ester having an alkyl group substituted with at least one hydroxyl group at the ester site are substantially the same as described above. For example, the (meth)acrylic acid ester may be 2-hydroxyethyl methacrylate. The (meth)acrylic acid ester may be present in an amount of 5 mol% to 50 mol%, for example, 5 mol% to 40 mol%, or 10 mol% to 40 mol%, in the monomer mixture based on a total 100 mol% of all monomers in the monomer mixture. Within these ranges, the (meth)acrylic acid ester can provide the glass transition temperature of the oligomer and can easily secure initial adhesion of the third adhesive layer.

In some embodiments, the (meth)acrylic acid ester having a substituted or unsubstituted C₆ to C₂₀ alicyclic group at the ester site, the (meth)acrylic acid ester having an alkyl group at the ester site, and the (meth)acrylic acid ester having an alkyl group substituted with at least one hydroxyl group at the ester site may be present in a total amount of 95 mol% or more, for example, 95 mol% to 100 mol%, or 100 mol%, in the monomer mixture based on a total 100 mol% of all monomers in the monomer mixture.

The oligomer may be prepared by polymerizing the monomer mixture through a typical polymerization method. The polymerization method may include any suitable method known to those skilled in the art. For example, the oligomer may be prepared by adding an initiator to the monomer mixture, followed by typical copolymerization, such as suspension polymerization, emulsion polymerization, solution polymerization, and the like. Polymerization may be performed at a temperature of 60°C to 70°C for 4 hours to 8 hours. The initiator may be selected from any typical initiators including azo-based polymerization initiators and/or peroxides, such as benzoyl peroxide or acetyl peroxide.

The heat curing agent is substantially the same as the heat curing agent described above.

The heat curing agent may be present in an amount of greater than 0 parts by weight to 3 parts by weight, for example, 0.001 parts by weight to 3 parts by weight, or 0.01 parts by weight to 2 parts by weight, relative to 100 parts by weight of the (meth)acrylic binder. Within these ranges, the third adhesive layer can achieve improvement in reliability.

The photoinitiator is substantially the same as the photoinitiator described above.

The photoinitiator may be present in an amount of greater than 0 parts by weight to 3 parts by weight, for example, 0.05 parts by weight to 3 parts by weight, or 0.1 parts by weight to 3 parts by weight, relative to 100 parts by weight of the (meth)acrylic binder. Within these ranges, the composition for the third adhesive layer can secure uniform curing of the (meth)acrylic binder through light irradiation and can prevent deterioration in transparency of the first adhesive layer due to residual initiator.

### First release film

The first release film serves to protect the second adhesive layer from external foreign substances.

The first release film may include an optically transparent resin film. For example, the first release film may be a polyester resin film.

The first release film may include at least one of a silicone coating layer or a fluorine coating layer on a surface thereof to facilitate release from the second adhesive layer.

### Second release film

The second release film serves to protect the third adhesive layer from foreign substances.

The second release film may be substantially the same as the first release film.

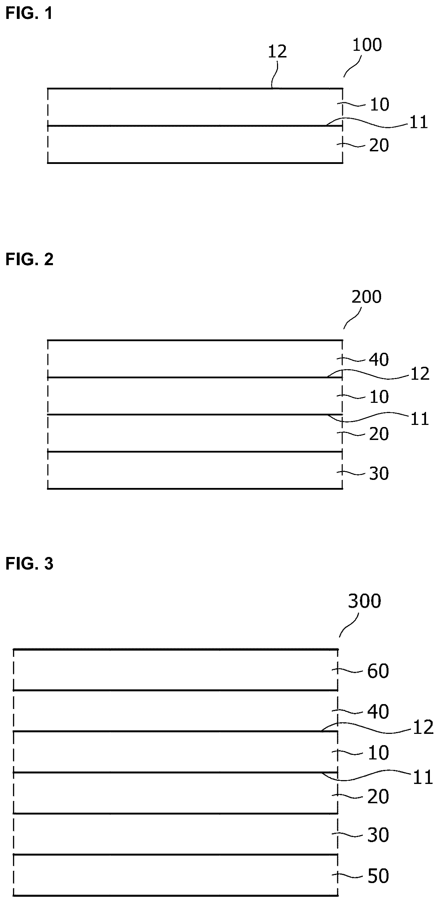

FIG. 1 to FIG. 3 are cross-sectional views of an adhesive sheet according to embodiments.

Referring to FIG. 1, the adhesive sheet 100 may include a base film 10 having a lower surface 11 and an upper surface 12 and a first adhesive layer 20 stacked on the lower surface 11 of the base film 10.

Referring to FIG. 2, the adhesive sheet 200 may include a base film 10 having a lower surface 11 and an upper surface 12, a first adhesive layer 20 stacked on a lower surface 11 of the base film 10, a second adhesive layer 30 stacked on a lower surface of the first adhesive layer 20, and a third adhesive layer 40 stacked on an upper surface 12 of the base film 10.

Referring to FIG. 3, the adhesive sheet 300 may include a base film 10 having a lower surface 11 and an upper surface 12, a first adhesive layer 20 stacked on a lower surface 11 of the base film 10, a second adhesive layer 30 stacked on a lower surface of the first adhesive layer 20, a first release film 50 stacked on a lower surface of the second adhesive layer 30, a third adhesive layer 40 stacked on an upper surface 12 of the base film 10, and a second release film 60 stacked on an upper surface of the third adhesive layer 40.

Next, the present disclosure will be described in more detail with reference to some examples. However, it should be noted that these examples are provided for illustration only and are not to be construed in any way as limiting the disclosure.

### Example 1

### (1) Preparation of stack of first adhesive layer and base film

In a 1 L reactor provided with a cooling device for temperature control under a nitrogen atmosphere, 100 parts by weight of a monomer mixture including 97 mol% of n-butyl acrylate and 3 mol% of 4-hydroxybutyl acrylate was placed together with ethyl acetate as a solvent. The reactor was purged with nitrogen for 1 hour so as to remove oxygen, followed by maintaining the inner temperature of the reactor at 62°C. After uniformly stirring the monomer mixture, 0.07 parts by weight of azobisisobutyronitrile (AIBN) was added as a reaction initiator and reacted with the monomer mixture for 8 hours to prepare a (meth)acrylic binder having a weight average molecular weight of 1,000,000 g/mol. A (meth)acrylic binder solution having a solid content of 24 wt% was prepared by diluting the resulting binder solution with ethyl acetate.

In terms of solid content, 100 parts by weight of the (meth)acrylic binder, 0.5 parts by weight of TD-75 (NCO reactive curing agent, solid content: 75%, Soken Co., Ltd.) as a heat curing agent, and 0.3 parts by weight of TPO (BASF) as a photoinitiator were mixed. Then, a mixture of photocurable monomers including 50 parts by weight of 3-phenoxybenzyl acrylate (POBA) as an aromatic group-containing monomer, 10 parts by weight of 4-hydroxybutyl acrylate (4-HBA) as a hydroxyl group-containing monomer, and 20 parts by weight of isobornyl acrylate (IBXA) as a hydrophobic group-containing monomer was added to the resulting mixture, which in turn was diluted with methyl ethyl ketone, thereby preparing a composition for the first adhesive layer having a total solid content of 25%.

The composition for the first adhesive layer was applied to one surface of a PEN film (Q8300, thickness: 25 µm, TOYOBO Co., Ltd.) subjected to corona treatment using an applicator and dried in an oven at 110°C for 4 minutes, thereby preparing a stack of the first adhesive layer (thickness: 25 µm) and the PEN film (thickness: 25 µm).

### (2) Preparation of second adhesive layer

Ethyl acetate was placed in a 1 L reactor provided with a cooling device for temperature control under a nitrogen atmosphere. 100 parts by weight of a monomer mixture including 75 mol% of 2-ethylhexyl acrylate, 15 mol% of methyl acrylate, and 10 mol% of 4-hydroxybutyl acrylate was added to the reactor. Nitrogen was supplied to the reactor for 30 minutes so as to remove oxygen, followed by maintaining the inner temperature of the reactor at 62°C. After uniformly stirring the monomer mixture, 0.07 parts by weight of AIBN was added as an initiator and reacted with the monomer mixture for 8 hours. 30 wt% of a (meth)acrylic prepolymer solution was prepared by adding ethyl acetate to the resulting mixture. 4.5 parts by weight of 2-isocyanatoethyl methacrylate was reacted with 100 parts by weight of a solid resin of the prepared (meth)acrylic prepolymer solution, thereby preparing a (meth)acrylic binder having a (meth)acrylate group on the side chain thereof (weight average molecular weight: 100,000 g/mol).

Ethyl acetate was placed in a 1 L reactor provided with a cooling device for temperature control under a nitrogen atmosphere. 100 parts by weight of a monomer mixture including 95 mol% of 2-ethylhexyl acrylate, 4.5 mol% of 4-hydroxybutyl acrylate and 0.5 mol% of silicone acrylate (KF-2012, Shin-Etsu Chemical Co., Ltd.) was added to the reactor. The reactor was purged with nitrogen for 30 minutes so as to remove oxygen, followed by maintaining the inner temperature of the reactor at 62°C. After uniformly stirring the monomer mixture, 0.07 parts by weight of AIBN was added as an initiator and reacted with the monomer mixture for 8 hours. 30 wt% of a silicone pre-oligomer solution was prepared by adding ethyl acetate to the resulting mixture. 2 parts by weight of 2-isocyanatoethyl methacrylate was reacted with 100 parts by weight of a solid resin of the prepared silicone pre-oligomer solution, thereby preparing a silicone oligomer having a (meth)acrylate group on the side chain thereof (weight average molecular weight: 80,000 g/mol).

A composition for the second adhesive layer was prepared by stirring 100 parts by weight of the prepared (meth)acrylic binder, 1 part by weight of the prepared silicone oligomer, 0.7 parts by weight of an isocyanate curing agent (TD-75), 0.5 parts by weight of a metal chelating agent (BXX-4805), and 0.1 part by weight of a photoinitiator (TPO-L) in terms of solid content.

The composition for the second adhesive layer was applied to a thickness of 100 µm on one surface of a PEN film (first release film) subjected to release treatment using an applicator and dried in an oven at 110°C for 5 minutes, thereby preparing a second adhesive layer having a thickness of 100 µm.

### (3) Preparation of third adhesive layer

A (meth)acrylic binder having a (meth)acrylate group on the side chain thereof was prepared in the same manner as in (2).

A silicone oligomer was prepared in the same manner as in (2).

Ethyl acetate was placed in a 1 L reactor provided with a cooling device for temperature control under a nitrogen atmosphere. 100 parts by weight of a monomer mixture including 20 mol% of 2-ethylhexyl acrylate, 50 mol% of isobornyl acrylate (IBXA), and 30 mol% of 2-hydroxyethyl methacrylate (2-HEMA) was added to the reactor. Nitrogen was supplied to the reactor for 30 minutes so as to remove oxygen, followed by maintaining the inner temperature of the reactor at 62°C. After uniformly stirring the monomer mixture, 0.07 parts by weight of AIBN was added as an initiator to the reactor and reacted with the monomer mixture for 8 hours, thereby preparing an oligomer having a high glass transition temperature. The oligomer had a weight average molecular weight of 80,000 g/mol, as measured by GPC, and a glass transition temperature of 15°C.

A composition for the third adhesive layer was prepared by mixing 100 parts by weight of the prepared (meth)acrylic binder, 1 part by weight of the prepared silicone oligomer, 5 parts by weight of the oligomer having a high glass transition temperature, 0.7 parts by weight of an isocyanate curing agent (TD-75), 0.5 parts by weight of a metal chelating agent (BXX-4805), and 0.1 part by weight of a photoinitiator (TPO-L) in terms of solid content.

The composition for the third adhesive layer was applied to a thickness of 25 µm on one surface of a PEN film (second release film) subjected to release treatment using an applicator and dried in an oven at 110°C for 5 minutes, thereby preparing a third adhesive layer having a thickness of 25 µm.

### (4) Preparation of adhesive sheet

In the stack of the PEN film and the first adhesive layer prepared in (1), the first adhesive layer and the second adhesive layer were sequentially stacked on the first release film, and the third adhesive layer and the second release film were sequentially stacked on the PEN film, thereby preparing an adhesive sheet in which the second release film, the third adhesive layer, the PEN film, the first adhesive layer, the second adhesive layer, and the first release film are stacked in the stated sequence.

### Examples 2 and 3

Adhesive sheets were prepared in the same manner as in Example 1 except that components of the composition for the first adhesive layer in Example 1 were changed as shown in Table 1.

### Comparative Examples 1 to 6

Adhesive sheets were prepared in the same manner as in Example 1 except that components of the composition for the first adhesive layer in Example 1 were changed as shown in Table 1.

The following properties were evaluated on the adhesive sheets prepared in Examples and Comparative Examples.

### (1) Keying strength (unit: gf/inch):

One surface of a polyethylene terephthalate (PET) film was subjected to corona treatment at 100 Wm/m² (Dose power). The stack of the first adhesive layer and the PEN prepared in each of Examples and Comparative Examples was attached to the PET film subjected to corona treatment and was left at room temperature for 30 minutes, thereby preparing a stack of the PET film, the first adhesive layer, and the PEN film stacked in the stated sequence. A specimen was prepared by cutting the stack to a size of 25 mm x 200 mm in width x length, followed by measuring the peel strength upon peeling the first adhesive layer off of the PET film at a peeling speed of 300 mm/min and at a peeling angle of 180° at 25°C using a tensile tester (Texture Analyzer, TA Industry) in accordance with JISZ2037.

The specimen was irradiated with UV light at 2,000 mJ through a UV exposer (UV irradiation at a wavelength of 395 nm), followed by measuring the peel strength (i.e., keying strength) in the same manner.

### (2) Chemical resistance

With the first release film removed from the adhesive sheet prepared in each of Examples and Comparative Examples, the adhesive sheet was attached to a 4" silicon wafer through the second adhesive layer using a mounter. Then, the adhesive sheet was irradiated with UV light at 2,000 mJ through a UV exposer (at a wavelength of 395 nm) and was dipped in a solution under Condition 1 or Condition 2. Diluent infiltration between the first adhesive layer and the second adhesive layer or lifting of the first adhesive layer was checked under a microscope. If (e.g., when) there was no diluent infiltration and no lifting, a corresponding specimen was evaluated as OK, and if (e.g., when) there was diluent infiltration and/or lifting, a corresponding specimen was evaluated as NG.
Condition 1: NMP (N-methyl-2-pyrrolidone) for 15 minutes at 70°C
Condition 2: DMSO (dimethyl sulfoxide) for 15 minutes at 70°C

### (3) Peel strength (unit: gf/inch)

(i) Preparation of specimen: A pre-specimen was prepared by cutting the adhesive sheet of each of Examples and Comparative Examples to a size of 25 mm x 200 mm in width x length, and the first release film was peeled off of the pre-specimen at 23°C and 50% RH to expose the second adhesive layer. The second adhesive layer was pressed onto a silicon wafer using a 2 kg roller to prepare a specimen. Thereafter, the specimen was left at 23°C and 50% RH for 30 minutes.
(ii) Initial peel strength: Peel strength was measured upon peeling the second adhesive layer off of the silicon wafer using a tensile tester (Texture Analyzer, TA Industry) at 25°C under conditions of a peeling speed of 300 mm/min and a peeling angle of 180° in accordance with JISZ2037.
(iii) Peel strength after pre-UV treatment: After specimens were prepared, each of the specimens was irradiated with UV light at 2,000 mJ through a UV exposer (at a wavelength of 395 nm). Thereafter, peel strength was measured upon peeling the second adhesive layer off of the silicon wafer using a tensile tester (Texture Analyzer, TA Industry) at 25°C under conditions of a peeling speed of 300 mm/min and a peeling angle of 180° in accordance with JISZ2037.
(iv) Peel strength after high temperature treatment: After specimens were prepared, each of the specimens was irradiated with UV light at 2,000 mJ through a UV exposer (at a wavelength of 395 nm). Then, the specimen was left in an oven at 200°C for 60 minutes. Thereafter, peel strength was evaluated upon peeling the second adhesive layer off of the silicon wafer using a tensile tester (Texture Analyzer, TA Industry) at 25°C under conditions of a peeling speed of 300 mm/min and a peeling angle of 180° in accordance with JISZ2037.

### (4) Residue after peeling

After specimens were prepared as in (i) in (3), each of the specimens was irradiated with UV light at 2,000 mJ through a UV exposer (at a wavelength of 395 nm). Then, the specimen was left in an oven at 200°C for 60 minutes and was left under conditions of 23°C and 50% RH for 30 minutes, followed by peeling the silicon wafer off of the second adhesive layer. No residue of the second adhesive layer on the silicon wafer was evaluated as X, a small amount of residue of the second adhesive layer thereon was evaluated as △, and a large amount of residue of the second adhesive layer thereon was evaluated as ∘.

**Table 1**

| | | Example | | | Comparative Example | | | | | |
|---|---|---|---|---|---|---|---|---|---|---|
| | | 1 | 2 | 3 | 1 | 2 | 3 | 4 | 5 | 6 |
| Binder | | 100 | 100 | 100 | 100 | 100 | 100 | 100 | 100 | 100 |
| Photocurable monomer mixture | POBA | 50 | 50 | 50 | 0 | 0 | 80 | 0 | 0 | 50 |
| | 4-HBA | 10 | 10 | 10 | 0 | 0 | 0 | 0 | 0 | 10 |
| | IBXA | 20 | 0 | 0 | 0 | 0 | 0 | 80 | 0 | 0 |
| | ACMO | 0 | 20 | 0 | 0 | 0 | 0 | 0 | 80 | 0 |
| | DCPA | 0 | 0 | 20 | 0 | 0 | 0 | 0 | 0 | 0 |
| Heat curing agent | | 0.5 | 0.5 | 0.5 | 0.5 | 0 | 0.5 | 0.5 | 0.5 | 0.5 |
| Photoinitiator | | 0.3 | 0.3 | 0.3 | 0.3 | 0 | 0.3 | 0.3 | 0.3 | 0.3 |
| Keying strength | Initial | 105 | 120 | 117 | 1357 | 15.0 | 127 | 430 | 534 | 237 |
| | After pre-UV treatment | 1568 | 1750 | 1695 | 1376 | 6.7 | 1498 | 1721 | 1682 | 1832 |
| Chemical resistance | NMP | OK | OK | OK | NG | OK | OK | OK | OK | NG |
| | DMSO | OK | OK | OK | NG | OK | OK | OK | OK | NG |
| Peel strength | Initial | 10.2 | 11.4 | 13.3 | 18.1 | 12.4 | 11.2 | 24.8 | 25.4 | 27.5 |
| | Pre-UV | 7.7 | 8.5 | 7.6 | 6 | 5 | 6.9 | 12.4 | 13.7 | 11.5 |
| | After high temperature process | 20.1 | 22.8 | 20.8 | 54.4 | 16.9 | 20.6 | 37.2 | 35.4 | 60.2 |
| Residue after peeling | | X | X | X | O | O | Δ | Δ | Δ | O |

| | | | | | | | | | | |
|---|---|---|---|---|---|---|---|---|---|---|
| *In Table 1, POBA: phenoxybenzyl acrylate, 4-HBA: 4-hydroxybutyl acrylate, IBXA: isobornyl acrylate, ACMO: acryloylmorpholine, DCPA: dicyclopentenyl acrylate | | | | | | | | | | |

As shown in Table 1, the adhesive sheets of Examples had high initial keying strength, which is advantageous for highly reliable adhesion to the base film, and high keying strength after pre-UV treatment, which is advantageous for high chemical resistance. As shown in Table 1, the adhesive sheets of Examples had high chemical resistance under both evaluation conditions. As shown in Table 1, the adhesive sheets of Examples had no residue of the second adhesive layer after peeling off the silicon wafer.

However, as shown in Table 1, the adhesive sheets of Comparative Examples did not have good chemical resistance, or had residue of the second adhesive layer after peeling off the silicon wafer, causing deterioration in reliability of the semiconductor manufacturing process.

It will be understood that the terms "includes," "including," "comprises," and/or "comprising," when used in this specification, specify the presence of stated features, steps, operations, elements, and/or components, but do not preclude the presence or addition of one or more other features, steps, operations, elements, components, and/or groups thereof. As used herein, the term "combination thereof" refers to a mixture, a laminate, a composite, a copolymer, an alloy, a blend, a reaction product, and/or the like of the constituents.

As used herein, the terms "use," "using," and "used" may be considered synonymous with the terms "utilize," "utilizing," and "utilized," respectively. As used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

The use of "may" when describing embodiments of the inventive concept refers to "one or more embodiments of the inventive concept."

As used herein, the term "about," and similar terms are used as terms of approximation and not as terms of degree, and are intended to account for the inherent deviations in measured or calculated values that would be recognized by those of ordinary skill in the art. "About" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.
It should be understood that various modifications, changes, alterations, and equivalent embodiments may be made by those skilled in the art without departing from the spirit and scope of the disclosure. Accordingly, the modified or transformed embodiments as such may not be understood separately from the technical ideas and aspects of the present disclosure, and the modified embodiments are within the scope of the claims of the present disclosure, and equivalents thereof.

## Claims

1. An adhesive sheet comprising:
a base film (10); and
a first adhesive layer (20) on a first surface of the base film (10),
wherein the base film (10) is a polyethylene naphthalate film,
the first adhesive layer (20) comprises:
a (meth)acrylic binder,
a photocurable monomer,
a heat curing agent, and
a photoinitiator, and
the photocurable monomer comprises a mixture of an aromatic group-containing monomer, a hydrophobic group-containing monomer, and a hydroxyl group-containing monomer.

2. The adhesive sheet as claimed in claim 1, wherein the aromatic group-containing monomer comprises a compound represented by Formula 1: 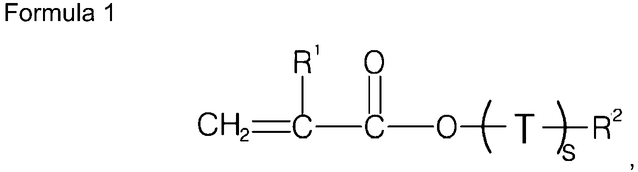 wherein in Formula 1,
R¹ is hydrogen or a methyl group;
s is an integer of 0 to 10;
R² is a substituted or unsubstituted C₆ to C₅₀ aryl group or a substituted or unsubstituted C₆ to C₅₀ aryloxy group; and
T is a substituted or unsubstituted C₁ to C₆ alkylene group or a substituted or unsubstituted C₁ to C₆ alkyleneoxy group.

3. The adhesive sheet as claimed in claim 1 or 2, wherein the aromatic group-containing monomer comprises at least one of phenoxybenzyl (meth)acrylate or biphenylmethyl (meth)acrylate.

4. The adhesive sheet as claimed in any one of claims 1 to 3, wherein the aromatic group-containing monomer is present in an amount of 30 parts by weight to 100 parts by weight relative to 100 parts by weight of the (meth)acrylic binder.

5. The adhesive sheet as claimed in any one of claims 1 to 4, wherein the hydrophobic group-containing monomer comprises at least one of a (meth)acrylic acid ester having a hydrophobic group at an ester site thereof or a (meth)acrylic monomer having a morpholine group.

6. The adhesive sheet as claimed in any one of claims 1 to 5, wherein the hydrophobic group-containing monomer comprises at least one selected from among isobornyl (meth)acrylate, dicyclopentenyl (meth)acrylate, dicyclopentanyl (meth)acrylate, and (meth)acryloylmorpholine.

7. The adhesive sheet as claimed in any one of claims 1 to 6, wherein the hydrophobic group-containing monomer is present in an amount of 1 part by weight to 50 parts by weight relative to 100 parts by weight of the (meth)acrylic binder.

8. The adhesive sheet as claimed in any one of claims 1 to 7, wherein the hydroxyl group-containing monomer is present in an amount of 1 part by weight to 50 parts by weight relative to 100 parts by weight of the (meth)acrylic binder.

9. The adhesive sheet as claimed in any one of claims 1 to 8, wherein the aromatic group-containing monomer is present in an amount of 50 parts by weight to 90 parts by weight, the hydroxyl group-containing monomer is present in an amount of 1 part by weight to 40 parts by weight, and the hydrophobic group-containing monomer is present in an amount of 5 parts by weight to 40 parts by weight, based on a total of 100 parts by weight of the aromatic group-containing monomer, the hydroxyl group-containing monomer, and the hydrophobic group-containing monomer.

10. The adhesive sheet as claimed in any one of claims 1 to 9, wherein at least one of the aromatic group-containing monomer, the hydrophobic group-containing monomer or the hydroxyl group-containing monomer has a homopolymer glass transition temperature of 0°C or higher.

11. The adhesive sheet as claimed in any one of claims 1 to 10, wherein the photocurable monomer is present in an amount of 50 parts by weight to 300 parts by weight relative to 100 parts by weight of the (meth)acrylic binder.

12. The adhesive sheet as claimed in any one of claims 1 to 11, wherein the aromatic group-containing monomer, the hydrophobic group-containing monomer, and the hydroxyl group-containing monomer are present in a total amount of 95 wt% or more in the photocurable monomer based on a total of 100 wt% of the photocurable monomer.

13. The adhesive sheet as claimed in any one of claims 1 to 12, wherein the (meth)acrylic binder is a copolymer of a monomer mixture comprising a (meth)acrylic acid ester having an alkyl group at an ester site thereof and a (meth)acrylic acid ester having an alkyl group substituted with at least one hydroxyl group at an ester site thereof.

14. The adhesive sheet as claimed in any one of claims 1 to 13, wherein the first adhesive layer (20) comprises:
100 parts by weight of the (meth)acrylic binder;
50 parts by weight to 300 parts by weight of the photocurable monomer;
greater than 0 parts by weight to 3 parts by weight of the heat curing agent; and
greater than 0 parts by weight to 3 parts by weight of the photoinitiator.

15. The adhesive sheet as claimed in any one of claims 1 to 14, further comprising:
a second adhesive layer (30) on the first adhesive layer (20), the first adhesive layer (20) being between the base film (10) and the second adhesive layer (30); and
a third adhesive layer (40) on a second surface of the base film (10), the second surface facing away from the first surface of the base film (10).
